Europäisches Patentamt

European Patent Office

Office européen des brevets

(19)

(11) Numéro de publication: **0 018 858**
**B1**

(12) **FASCICULE DE BREVET EUROPEEN**

(45) Date de publication du fascicule du brevet: **21.09.83**

(51) Int. Cl.³: **F 02 P 5/08**

(21) Numéro de dépôt: **80400381.2**

(22) Date de dépôt: **21.03.80**

(54) **Procédé et dispositif de calcul et de réglage de l'optimalisation de l'avance à l'allumage.**

(30) Priorité: **26.04.79 FR 7910598**

(43) Date de publication de la demande:
**12.11.80 Bulletin 80/23**

(45) Mention de la délivrance du brevet:
**21.09.83 Bulletin 83/38**

(84) Etats contractants désignés:
**DE GB IT SE**

(56) Documents cités:
**FR - A - 2 337 261**
**FR - A - 2 398 895**
**GB - A - 1 529 364**
**US - A - 4 002 155**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Deleris, Robert**
**36 Square des Marronniers**
**F-78870 Billy (FR)**
Inventeur: **Lepretre, Bernard**
**13, rue Mollien**
**F-92100 Boulogne-Billancourt (FR)**

(74) Mandataire: **Jacques, Max et al,**
**RNUR - S. 0804 BP 103**
**F-92109 Boulogne Billancourt (FR)**

Courier Press, Leamington Spa, England.

# Procede et dispositif de calcul et de reglage de l'optimalisation de l'avance a l'allumage

La présente invention est relative à un procédé et un dispositif de calcul et de réglage de l'optimalisation de l'avance à l'allumage sur moteur à combustion interne au moyen d'un dispositif de détection de cliquetis.

Les moteurs performants tels que moteurs suralimentés ou à taux de compression élevé ont tendance, en pleine charge, à cliqueter pour une avance à l'allumage nettement inférieure à l'avance optimale.

Compte tenu du désagrément et même du risque de destruction du moteur que représente la présence du cliquetis, il est nécessaire, lorsque l'on dispose d'un système d'allumage classique, de choisir une loi d'avance centrifuge qui présente une garde importante, de l'ordre de quatre degrés, par rapport à l'avance qui déclenche le cliquetis. Ceci peut finalement se traduire par une perte importante de rendement qui se répercute, compte tenu de la limitation dans le choix des lois centrifuges, même sur les zones où le cliquetis est inexistant.

On a déjà tenté dans de nombreuses variantes de résoudre le problème ci-dessus. Les principes de toutes ces variantes sont les suivants:

— choix d'une loi centrifuge passant à proximité du cliquetis, voire dans la zone du cliquetis,
— détection de la présence du cliquetis par mesure d'une accélération et comparaison avec un seuil,
— diminution plus ou moins rapide de l'avance,
— retour instantané ou progressif à l'avance nominale.

Une des difficultés des solutions préconisées réside dans le choix du seuil au-delà duquel on décide qu'il y a cliquetis. Ce choix doit, en effet, tenir compte de la dispersion entre les moteurs, des variations de gain électronique, de la sensibilité du capteur entre autres choses.

Ce point est toujours délicat à régler même dans le cas de seuils dits auto-adaptatifs.

Le brevet GB—A—1 529 364 décrit un dispositif et un procédé de réglage de l'avance à l'allumage d'un moteur à combustion interne au moyen d'un système de détection du cliquetis à l'aide d'un capteur. Selon ce procédé, on fait subir un traitement analogique au signal du capteur. Ce traitement comporte entre autre l'intégration du signal du capteur. Le signal intégré résultant est converti sous forme numérique. On compare ce signal intégré et converti sous une forme numérique à un autre signal d'un élément et on en déduit un signal que l'on utilise ensuite pour agir sur l'avance de l'allumage électrique.

Comme les autres dispositifs de l'art antérieur, celui-ci ne fonctionne que lorsqu'il y a effectivement cliquetis. Dans le meilleur des cas, on ne peut donc supprimer totalement le cliquetis dont il subsiste toujours un petit nombre de coups. Ce nombre peut diminuer lorsqu'on augmente le temps de retour à l'avance nominale mais alors on reste plus longtemps dans une zone où le rendement est plus faible. La présente invention a principalement pour but d'éviter cet inconvénient.

Par ailleurs, dans tous les systèmes antérieurs, le seuil choisi est commun à tous les cylindres du moteur. Il est difficile de discerner entre cliquetis et apparition de bruits d'origine mécanique. C'est le cas en particulier lorsqu'on augmente les jeux des culbuteurs. Un autre but plus particulier de l'invention est d'assurer une meilleure discrimination entre cliquetis et bruits d'origine mécanique.

Suivant la présente invention, on règle l'avance à l'allumage en fonction de seuils réellement auto-adaptatifs, c'est-à-dire totalement indépendants des déréglages ou du vieillissement des moteurs. De plus, en ce qui concerne la détection, on traite de préférence les cylindres un par un.

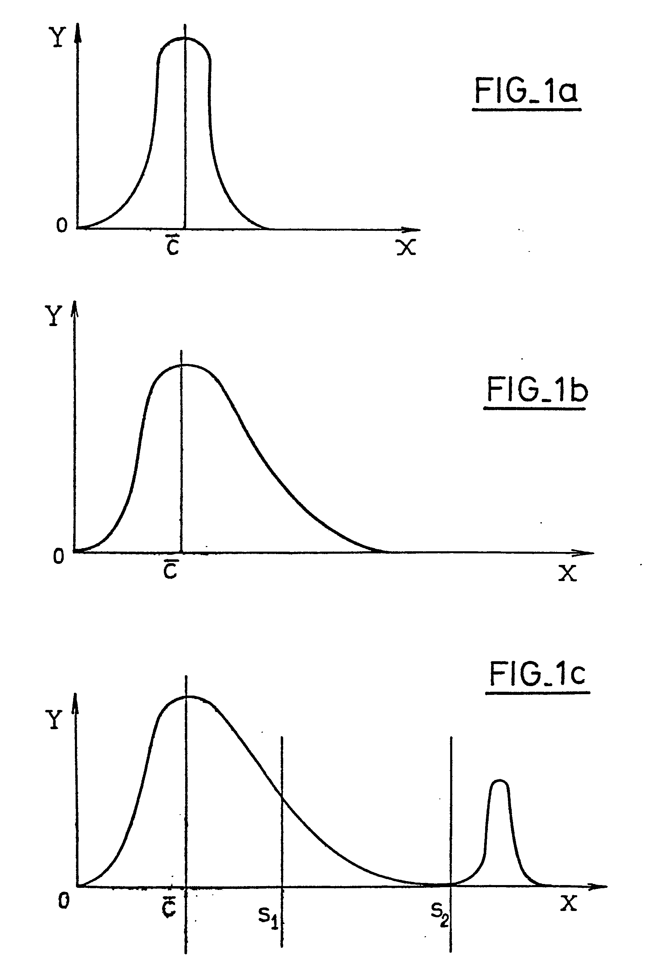

L'organe de détection de cliquetis utilisé est un accéléromètre qui est vissé sur la culasse à un endroit approprié. Le signal prélevé à la sortie de l'accéléromètre est amplifié, filtré et intégré à l'intérieur d'une fenêtre dont on précisera les limites ultérieurement. Le résultat est un signal S. Si l'on procède ensuite à un dépouillement statistique de ce signal S, pour un régime moteur et une charge moteur donnés en fonction de l'avance à l'allumage, on obtient trois formes de courbes caractéristiques des densités de probabilité Y en fonction de la valeur X du signal accélérométrique intégré suivant les cas qui sont représentées à la figure 1 successivement de haut en bas, à savoir: la figure 1a représente la forme de l'enveloppe du dépuillement statistique du signal S en l'absence de cliquetis. Dans ce cas, la courbe a une forme classique connue sous le nom de courbe en cloche ou courbe de Gauss. La figure 1b montre qu'il se crée un étalement de la partie droite de la courbe précédente en présence de précliquetis, tandis que la courbe 1c illustre la même courbe de répartition statistique dans le cas de cliquetis audible. L'étalement constaté précédemment se prolonge et une seconde raie de signal apparaît. Il est donc intéressant d'engendrer une valeur moyenne $\overline{C}$ proportionnelle aux $n$ coups de cliquetis précédents, et d'utiliser cette valeur $\overline{C}$ pour calculer deux seuils de comparaison $S_1$ et $S_2$ qui sont illustrés à la figure 1C et qui seront affectés respectivement au précliquetis et au cliquetis audible.

De ce fait, lors du franchissement de l'un de ces seuils par la valeur instantanée du signal sortant de l'accéléromètre et intégrée, on peut envisager plusieurs solutions pour corriger l'avance à l'allumage lorsque cette dernière est source de précliquetis ou de cliquetis audible.

La présente invention est relative tout d'abord à un procédé de calcul et de réglage de l'optimalisation de l'avance à l'allumage d'un moteur à combustion interne au moyen d'un système de détection du cliquetis à l'aide d'un accéléromètre rigidement fixé sur la culasse du moteur, selon lequel on fait subir un traitement analogique au signal accélérométrique comportant entre autres l'intégration dudit signal à l'intérieur d'une fenêtre de dimension déterminée, on convertit le signal intégré sous forme numérique, on compare la valeur accélérométrique intégrée et convertie sous une forme numérique à au moins un seuil de comparaison et l'on agit sur l'avance de l'allumage électronique en fonction du résultat de ladite comparaison, caractérisé en ce que l'on calcule une valeur moyenne $\overline{C}$ proportionnelle aux $n$ coups de cliquetis précédents, on calcule deux seuils de comparaison $S_1$ et $S_2$ qui sont chacun une fonction linéaire de la valeur moyenne $\overline{C}$ calculée précédemment, on compare la valeur accélérométrique intégrée et convertie sous une forme numérique à chacun de ces seuils et l'on en déduit l'existence ou l'absence d'une valeur de précliquetis et/ou de cliquetis audible que l'on utilise ensuite pour assurer ladite action sur l'avance programmée de l'allumage électronique.

Suivant une caractéristique importante, le procédé suivant l'invention permet de traiter tous les cylindres du moteur, successivement un par un, pour la détection.

Suivant une troisième caractéristique importante dans le procédé suivant l'invention, la fenêtre d'intégration s'étend sur 40° à partir de chaque point mort haut et de chaque point mort bas successivement rencontrés.

La présente invention est également relative à un dispositif spécialement conçu pour la mise en oeuvre du procédé tel que défini ci-dessus comprenant des moyens de traitement analogiques du signal prélevé sur l'accéléromètre, ces moyens comportant entre autres un intégrateur, des moyens logiques de commande de l'intégrateur, un convertisseur analogique-numérique, des moyens de comparaison du signal modifié du capteur avec au moins un signal de comparaison et un dispositif d'allumage électronique commandé par lesdits moyens de comparaison, caractérisé en ce que ledit dispositif comprend un microcalculateur comportant un étage de calcul d'une valeur moyenne $\overline{C}$ proportionnelle aux $n$ coups de cliquetis précédents, deux étages de calcul de seuils de comparaison $S_1$ et $S_2$ qui sont chacun une fonction linéaire de la valeur moyenne $\overline{C}$ calculée précédemment et lesdits moyens de comparaison pour en déduire l'existence ou l'absence d'une valeur de précliquetis et/ou de cliquetis audible.

Suivant une première caractéristique du dispositif, le système de calcul et de réglage de l'optimalisation de l'avance à l'allumage selon la présente invention qui est du type comprenant un capteur de position angulaire lié au volant moteur, est remarquable en ce que les moyens logiques de commande de l'intégrateur comportent une boucle à verrouillage de phase connectée aux entrées D et H d'un registre à décalage ayant un certain nombre de sorties en parallèle, deux bascules de type RS connectées par leurs entrées respectives à des sorties dudit registre à décalage correctement choisies et connectées à leur tour par leurs sorties à deux interrupteurs analogiques situés dans ledit circuit intégrateur.

Suivant une seconde caractéristique du dispositif, le système de calcul et de réglage de l'optimalisation de l'avance à l'allumage selon la présente invention est remarquable en ce que les sorties des deux bascules de type RS mentionnées ci-dessus sont également connectées en entrées sur une porte logique à fonction OU exclusif dont la sortie est reliée à l'entrée du séquenceur qui constitue le premier étage du microcalculateur, ce dernier étant connecté par ses sorties, d'une part, à l'étage de calcul de la valeur moyenne $\overline{C}$, d'autre part, audit convertisseur analogique-numérique.

Suivant une troisième caractéristique du dispositif, le système de calcul et de réglage de l'optimalisation de l'avance à l'allumage suivant la présente invention est remarquable en ce que la sortie du convertisseur analogique-numérique est connectée en parallèle en entrées sur l'étage de calcul de valeur moyenne $\overline{C}$ et sur des comparateurs fournissant par leurs sorties, le premier directement une information relative au précliquetis et les deux, par une combinaison de leurs sorties, une information relative au cliquetis audible.

Par ailleurs, le FR—A—2 398 895 décrit un dispositif de calcul et de réglage de l'optimalisation de l'avance à l'allumage d'un moteur à combustion interne au moyen d'un système de détection de cliquetis à partir d'un accéléromètre dans lequel les moyens de traitement analogiques du signal prélevé sur l'accéléromètre comprennent la combinaison en série d'un amplificateur de charge et d'un étage de filtrage passe-haut, passe-bas réglé sur la fréquence de résonnance de la chambre de combustion. Suivant une quatrième caractéristique du dispositif, les moyens de traitement analogiques comprennent en outre un premier interrupteur analogique, un étage de redressement double alternance, l'intégrateur commandé supportant, en parallèle, le second interrupteur analogique et un étage de sortie dont le conducteur de sortie est connecté en entrée sur ledit convertisseur analogique-numérique. D'autres caractéristiques ressortiront de la description qui suit et qui n'est donnée qu'à titre d'exemple. A cet effet, on se reportera au dessin joint dans lequel:

— la figure 1 illustre trois formes de courbes caractéristiques,

— la figure 2 illustre sous forme de schéma-blocs un mode de réalisation du dispositif électronique suivant l'invention,

— la figure 3 illustre un mode de réalisation détaillé de la partie traitement du signal analogique en provenance du capteur accélérométrique utilisée à la figure 2,

— la figure 4 illustre, sous forme de schéma-blocs, le bloc logique de commande, et

— la figure 5 illustre un mode de réalisation détaillé du bloc logique de commande suivant la figure 4.

Les mêmes références désignent les mêmes éléments dans les différentes figures.

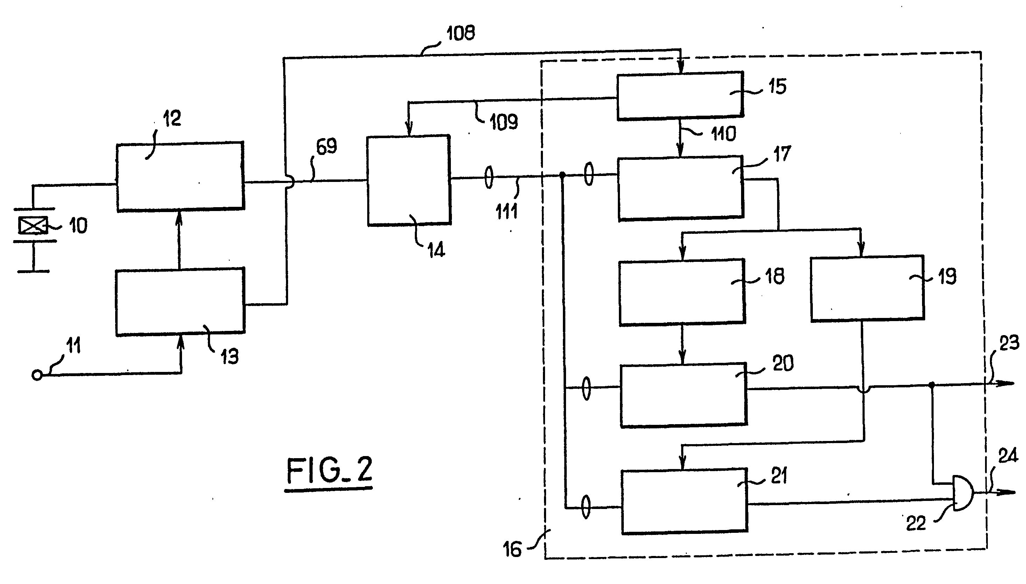

Suivant le mode de réalisation de la figure 2, un organe de détection du cliquetis est constitué par un accéléromètre 10 de nature piézo-électrique vissé sur la culasse du moteur en un endroit approprié. L'accéléromètre 10 est relié en entrée à un circuit 12 de traitement analogique du signal engendré par l'accéléromètre 10. Une seconde entrée 11 est connectée à un capteur de position angulaire associé au volant moteur du véhicule pour repérer le passage du point mort haut. Cette seconde entrée 11 est reliée à l'entrée d'un bloc logique de commande 13 relié par ses sorties, d'une part, à une entrée du circuit 12 de traitement analogique du signal accélérométrique, d'autre part, par sa sortie de maintien, à une entrée d'une unité de calcul 16 réalisée autour et avec le concours d'un microcalculateur dont le choix du type n'est pas fondamental. On reviendra ultérieurement sur la description statique et la description fonctionnelle dudit microcalculateur 16. La sortie du circuit 12 de traitement analogique du signal accélérométrique est reliée à une entrée d'un convertisseur analogique-numérique 14 de type à approximations successives et qui a pour rôle de numériser le signal traité analogiquement et intégré dans le circuit 12. La sortie du convertisseur 14 qui comporte un certain nombre de conducteurs en parallèle, huit ou seize, suivant le type de matériel utilisé tant comme convertisseur 14 que comme microcalculateur 16, est reliée en entrées au niveau de trois étages différents 17, 20 et 21 de calcul du microcalculateur 16. Ce microcalculateur 16 a deux sorties principales 23 et 24 sur lesquelles apparaissent respectivement les signaux représentatifs du précliquetis, cylindre par cylindre, sur le conducteur 23 et ceux représentatifs du cliquetis, cylindre par cylindre, sur le conducteur 24.

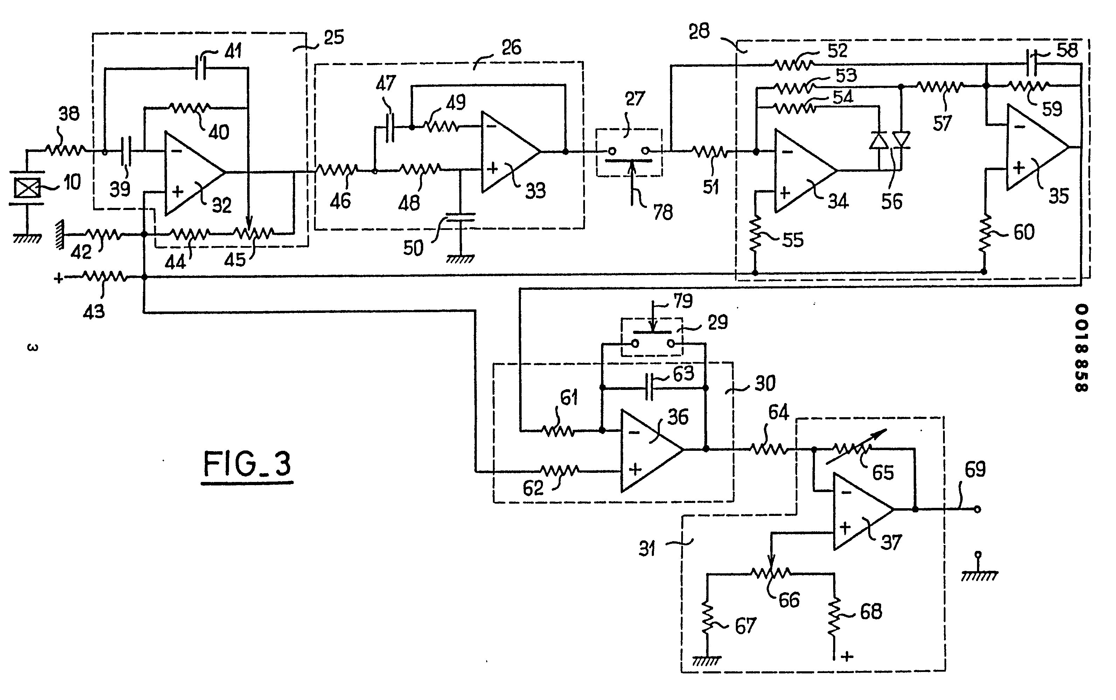

La figure 3 illustre un mode de réalisation détaillé du circuit 12 de la figure 2 relatif au traitement analogique du signal engendré par l'accéléromètre 10. Le circuit de traitement analogique comprend successivement: un amplificateur de charge 25, un étage de filtrage passe-haut, passe-bas 26 réglé sur la fréquence de résonnance de la chambre de combustion, un étage de redressement double alternance 28, un intégrateur commandé 30 fonctionnant sur une fenêtre limitée au point mort haut, d'une part, au point mort haut plus 40° environ au moyen de deux interrupteurs analogiques 27 et 29 commandés à partir du bloc logique de commande 13 de la figure 2, d'autre part, enfin, un étage de sortie 31 dont la sortie 69 est connectée en entrée sur le convertisseur analogique-numérique 14. D'une façon plus détaillée, l'amplificateur de charge 25 est constitué par un amplificateur opérationnel 32 dont l'entrée inverseuse est connectée à la sortie de l'accéléromètre 10 par la connexion en série d'une résistance 38 et d'un condensateur 39. Un chemin de contre-réaction sur l'amplificateur 32 comprend en parallèle une résistance 40 et un condensateur 41 qui filtre le signal. Par le biais d'un réseau comprenant la connexion en série d'une résistance 44 et d'un potentiomètre 45 reliés entre le point commun à la résistance 40 et au condensateur 41, d'une part, l'entrée non inverseuse de l'amplificateur 32, d'autre part, on peut agir sur le gain de l'étage amplificateur sans trop modifier pour cela la constante de filtrage de l'étage 26. Un réseau de résistances 42 et 43 connectées en série entre la masse et le plus de la batterie du véhicule et dont le point commun aux résistances est relié à l'entrée non inverseuse de l'amplificateur 32 forme un décalage de tension égal à Valim/2 qui réalise une masse fictive permettant ainsi une alimentation en monotension.

La sortie de l'amplificateur opérationnel 32 formant amplificateur de charge est connectée, d'une part, à l'entrée non inverseuse d'un second amplificateur opérationnel 33 par la connexion en série de deux résistances 46 et 48 et d'un condensateur 50 ayant une de ses armatures à la masse, d'autre part, à l'entrée inverseuse du même amplificateur opérationnel par la connexion en série d'un condensateur 47 et d'une résistance 49. La sortie de l'amplificateur opérationnel 33 est connectée par un chemin de réaction au point commun au condensateur 47 et à la résistance 49. L'amplificateur 33 associé aux résistances 46, 48 et 49 et aux condensateurs 47 et 50 forme un filtre passe-bas du deuxième ordre à 12 dB par octave, l'entrée inverseuse de l'amplificateur 33 recevant le signal issu de l'amplificateur de charge 25. La sortie de l'amplificateur 33 est connectée, par l'intermédiaire de l'interrupteur 27 et d'une résistance 51 en série, à l'entrée inverseuse d'un troisième amplificateur opérationnel 34 faisant partie de l'étage 28 de redressement double alternance. La sortie de l'amplificateur opérationnel 34 est connectée à l'entrée inverseuse du même amplificateur par l'intermédiaire de deux chemins en parallèle comprenant, d'une part, deux diodes 56 montées tête-bêche, d'autre part, chacun une résistance en série, respectivement 54 et 53. Le point commun à la résistance 53 et à sa diode 56 associée est connecté, d'une part, à l'entrée inverseuse d'un quatrième amplificateur opérationnel 35 par l'intermédiaire d'une résistance 57, d'autre part, à la sortie dudit amplificateur opérationnel 35 par l'intermédiaire d'une résistance 59 en série avec la résistance 57. Sur la résistance 59 est disposé en parallèle un condensateur 58 qui est, en outre, connecté par une de ses armatures au point commun à l'interrupteur 27 et à la résistance d'entrée 51 par l'intermédiaire d'une résistance 52. Les entrées non inverseuses des amplificateurs opérationnels 34 et 35 constituant l'étage 28 de redressement double alternance sont reliées toutes deux au point commun aux résistances 42 et 43 fournissant la tension Valim/2 par l'intermédiaire de résistances respectives 55 et 60. La capacité 58 a pour rôle de commencer une légère intégration au niveau redressement. La sortie de l'amplificateur 35 est connectée à l'entrée inverseuse d'un cinquième amplificateur opérationnel 36 formant étage intégrateur commandé par l'interrupteur 29, par l'intermédiaire d'une résistance 61 en série. L'entrée non inverseuse de l'amplificateur opérationnel 36 est reliée au point commun aux résistances 42 et 43 fournissant la tension Valim/2 par l'intermédiaire d'une résistance 62 en série. La sortie de l'amplificateur opérationnel 36 est reliée, d'une part, à son entrée inverseuse par un chemin de réaction comportant un condensateur 63 sur lequel est monté en parallèle le second interrupteur 29, d'autre part, à l'entrée inverseuse d'un sixième amplificateur opérationnel 37 réalisant l'étage de sortie par l'intermédiaire d'une résistance 64 en série. L'amplificateur 36 forme un étage intégrateur commandé par le second interrupteur 29, lui-même commandé par le même bloc logique 13 que l'interrupteur 27. La sortie de l'amplificateur opérationnel 37 est reliée à son entrée inverseuse par un chemin de réaction comportant un potentiomètre réglable 65 qui permet de régler la valeur de la tension analogique de sortie en 69. L'entrée non inverseuse de l'amplificateur opérationnel 37 est reliée à la prise mobile d'un potentiomètre 66 dont la résistance est en série dans un réseau diviseur de tension et qui comprend, entre la masse et le plus de la batterie, la connexion en série de trois résistances 67, 66 et 68 dont le rôle consiste à rattraper le décalage (offset) des divers amplificateurs précédents.

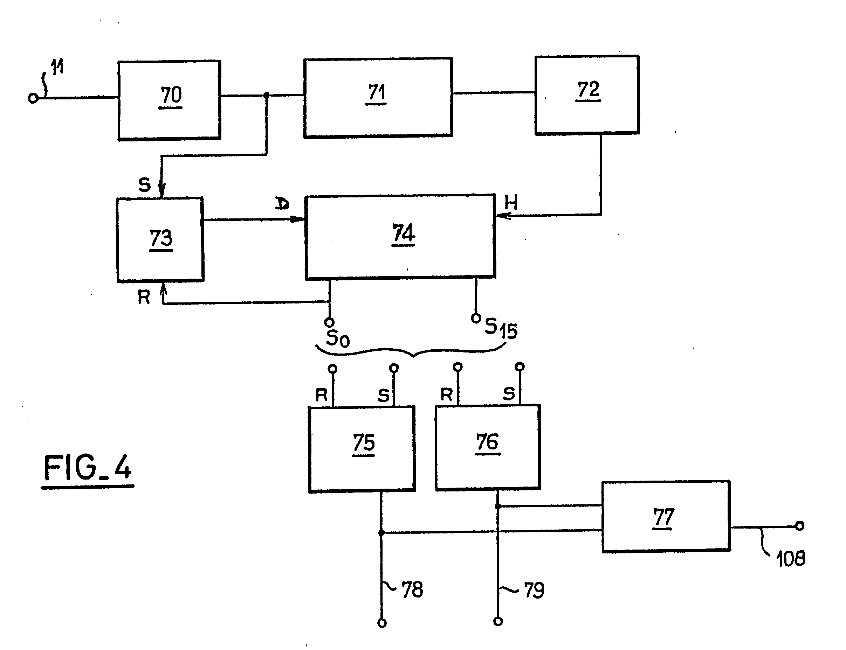

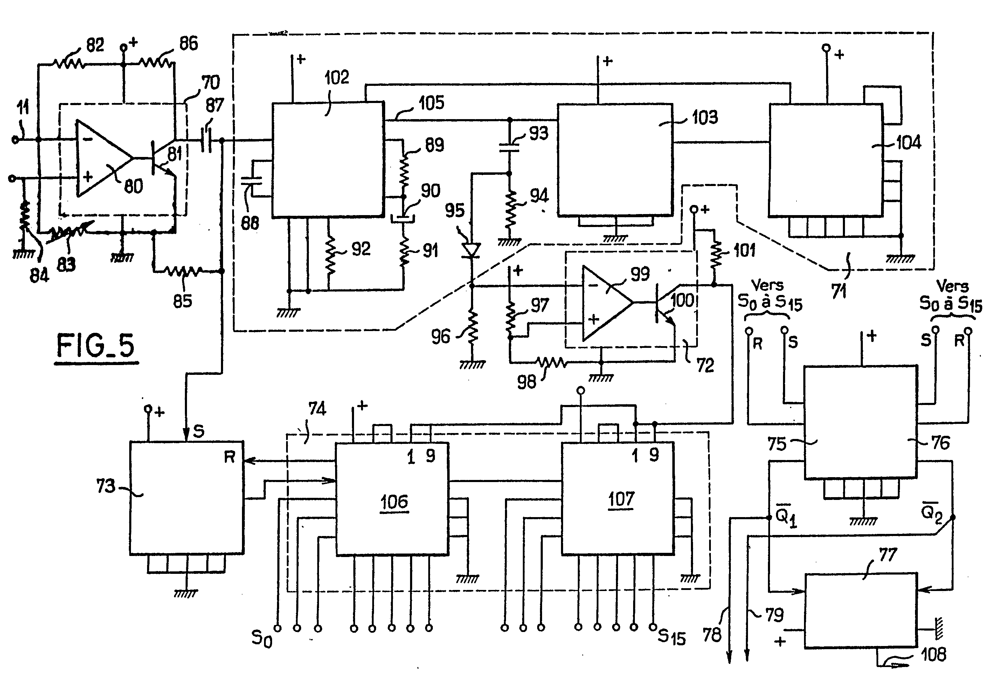

On passe à présent à la description du bloc logique de commande 13 de l'intégrateur 12 représenté aux figures 4 et 5. A la figure 4, l'entrée 11 déjà rencontrée à la figure 2 et connectée à un capteur de position angulaire est reliée à un circuit 70 d'entrée et de mise en forme du signal capté. La sortie du circuit de mise en forme 70 est reliée, d'une part, à un circuit 71 constitué par une boucle à verrouillage de phase (phase locked loop ou PLL), d'autre part, à une bascule RS73. Le circuit 71 formant boucle à verrouillage de phase est relié par sa sortie à un circuit demise en forme 72 et les circuits 73 et 72 sont reliés par leurs sorties respectivement à l'entrée ordinaire D et à l'entrée horloge H d'un registre à décalage 74 ayant seize sorties en parallèle $S_0$ à $S_{15}$ qui sont reliées aux entrées respectives R et S de deux bascules 75 et 76 dont les sorties respectives 78 et 79 sont connectées, d'une part, à une porte 77 génératrice d'une impulsion de maintien pour le séquenceur 15 du microcalculateur 16 et, d'autre part, aux interrupteurs 27 et 29 de la figure 3 qui commandent le fonctionnement de l'intégrateur 30—36.

La figure 5 illustre en détail un mode de réalisation du bloc logique de commande 13. Le circuit 70 d'entrée et de mise en forme du signal capté à partir d'un capteur de position angulaire du point mort haut ou tout autre point de référence, associé au volant moteur comprend un premier amplificateur opérationnel 80 dont la sortie est reliée à la base d'un transistor 81 monté avec l'émetteur à la masse. Le collecteur du transistor 81 est relié à l'entrée inverseuse de l'amplificateur opérationnel 80 par la connexion en série de résistances 86 et 82 dont le point commun est relié au plus de la batterie. L'entrée non inverseuse de l'amplificateur 80 est à la masse par l'intermédiaire d'une résistance 84 et l'entrée inverseuse de l'amplificateur 80 est également à la masse par l'entremise d'un potentiomètre 83. Le collecteur du transistor 81 est relié au premier étage 102 de la boucle PLL71 par l'intermédiaire d'un condensateur 87 dont l'armature la plus proche de la boucle PLL71 est reliée, d'une part, à l'émetteur du transistor 81 par une résistance 85, d'autre part, à l'entrée de qualification S de la bascule RS73. La résistance 82 et le potentiomètre 83 permettent de régler la sensibilité du déclenchement de l'amplificateur 80 qui a un rôle de mise en forme du signal émanant du capteur de position angulaire. La résistance 86 sert de charge à la sortie de l'amplificateur 80—81 monté en collecteur ouvert. Le réseau dérivateur, formé du condensateur 87 et de la résistance 85, sert à ne prendre en compte que le front montant du signal capteur 11 mis en forme par l'amplificateur 80—81.

Les circuits 102, 103, 104 et en particulier le premier d'entre eux 102, associé aux résistances 89, 91, 92 et aux condensateurs 88 et 90, forment une boucle PLL classique qui délivre, entre deux tops successifs du capteur angulaire connecté en 11, des signaux distants de 3,75° quel que soit le régime de rotation sur le conducteur de sortie 105 du circuit 102. Ces signaux sont dérivés par le réseau formé d'un condensateur 93 et d'une résistance 94 et mis en forme dans le circuit 72 constitué par un second amplificateur opérationnel 99 relié par sa sortie à la base d'un transistor 100 dont l'émetteur est à la masse et le collecteur au plus de la batterie par l'intermédiaire d'une résistance 101 en série. L'entrée inverseuse de l'amplificateur opérationnel 99 est connectée au point commun à une diode 95 et à une résistance en série 96 qui forment une connexion en série entre la masse et le point commun au condensateur 93 et à la résistance 94 constituant le réseau dérivateur connecté à la sortie du circuit 102. L'entrée non inverseuse de l'amplificateur opérationnel 99 est connectée au point commun à deux résistances 97 et 98 reliées en série et formant un point diviseur de tension entre le plus de la batterie et la masse. Le circuit de mise en forme 72 associé aux résistances 96, 97, 98, 101 permet de mettre en forme les signaux dérivés par le réseau 93, 94. Les amplificateurs opérationnels 80 et 99 peuvent être du type LM311 au catalogue de NATIONAL SEMICONDUCTOR et les circuits 102, 103 et 104 peuvent être respectivement des types 14046, 14022 et 14018 au même catalogue.

La sortie de l'amplificateur 99 qui part du collecteur du transistor 100 est reliée en parallèle aux entrées 1 et 9 de deux registres à décalages 106 et 107 dont l'ensemble forme l'équivalent du registre à décalage 74 de la figure 4. Ces registres à décalage sont du type entrée série, sorties en parallèle. Les entrées 1 et 9 sont les horloges des registres 106 et 107 qui peuvent être tous deux du type 14015 au catalogue de NATIONAL SEMICONDUCTOR.

La sortie du réseau dérivateur constitué par le condensateur 87 et la résistance 85 à la sortie du circuit 70 est connectée sur l'entrée S de la bascule RS73, l'entrée R de ladite bascule étant actionnée par le premier chiffre binaire de sortie du registre à décalage 106. Ce qui fait que, lorsque le circuit 70 délivre un signal capteur, la sortie de la bascule RS73 qui est connectée sur l'entrée "données" du registre à décalage 106 passe à l'état haut et est remise à zéro par la sortie $S_0$ du registre 106. Cette impulsion ainsi créée transite sur les différentes sorties $S_0$ à $S_{15}$ des registres à décalage 106 et 107 et ce, à la vitesse d'horloge de la boucle PLL102, 103, 104.

De ce fait, il est possible d'engendrer très facilement des impulsions de largeur angulaire déterminée en connectant par exemple les entrées R et S de la bascule 75 sur les sorties appropriées $S_0$ à $S_{15}$ du registre à décalage 106—107. En réalisant la même opération relativement aux entrées R et S de la bascule 76, on obtient une seconde impulsion de largeur angulaire appropriée. La bascule RS73 et l'ensemble des bascules RS75—76 peuvent être du type 14013 au catalogue de NATIONAL SEMICONDUCTOR. Ces deux impulsions apparaissent respectivement en $\overline{Q1}$ et $\overline{Q2}$ sur les sorties respectives 78 et 79 des bascules 75 et 76 et ont pour but de commander les interrupteurs 27 et 29 de la figure 3. En réalisant des impulsions de commande $I_1$ et $I_2$ de largeurs différentes, en appliquant l'impulsion $I_1$ de plus faible largeur à l'interrupteur 27 et l'impulsion $I_2$ de plus grande largeur à l'interrupteur 29, on retarde la remise à zéro de l'intégrateur 30—36 à la figure 3, bien qu'ayant fermé préalablement l'interrupteur 27 qui autorise le passage du signal analogique en provenance du capteur 10. De ce fait, l'intégrateur 30—36 mémorise la valeur maximale intégrée du signal pendant la différence de largeur des deux impulsions de commande.

Les sorties $\overline{Q1}$ et $\overline{Q2}$ des bascules RS75 et 76 sont également connectées aux entrées respectives d'une porte logique 77 à fonction OU exclusif qui fournit sur sa sortie 108 pour le microcalculateur 16 de la figure 2 un signal de maintien qui est un créneau en phase et de largeur égale au signal intégré et mémorisé dans l'amplificateur 30—36 de la figure 3.

Le rôle du bloc de commande illustré aux figures 4 et 5 est de ne permettre l'intégration du signal accélérométrique que pendant la phase de rotation moteur où le cliquetis est susceptible de se produire, c'est-à-dire dans une plage angulaire située sensiblement entre le point mort haut et le point mort haut plus 40°, d'une part, entre le point mort bas et le point mort bas plus 40°, d'autre part. La porte OU exclusif 77 peut être du type CD4030 au catalogue de NATIONAL SEMICONDUCTOR.

On revient à présent à la figure 2 qui illustre schématiquement un mode de réalisation du microcalculateur 16.

Le convertisseur analogique-numérique 14 est constitué par un seul boîtier du commerce, de type ADC800 au catalogue de NATIONAL SEMICONDUCTOR. Il fonctionne par approximations successives. Son rôle est de numériser le signal intégré dans l'amplificateur 30—36 de la figure 3 et qui apparaît sur la sortie 69 de l'étage 31.

Le rôle essentiel du microcalculateur 16 de la figure 2 est le calcul des seuils de comparaison, destinés à la détection, cylindre par cylindre, du cliquetis et du précliquetis comme cela a été mis précédemment en évidence à l'aide de la figure 1.

A la figure 2, on distingue deux parties principales, à savoir un séquenceur 15 et le reste des circuits qui sont les circuits de calcul de seuils et de comparaison à l'intérieur du microcalculateur 16. Le séquenceur 15 est adressé par le signal de maintien en provenance par le conducteur 108 de la porte OU exclusif 77 de la figure 5 et permet au convertisseur analogique-numérique 14 grâce à sa connexion 109 d'assurer la conversion des données analogiques relatives à chaque cylindre. Ceci parce que le signal de maintien est émis deux fois par tour moteur étant donné que ce signal est émis alternativement en association avec le point mort haut et avec le point mort bas. De ce fait, on réalise bien sur le conducteur 111 à la sortie du convertisseur 14 une numérisation pour chaque cylindre. Cette numérisation individualisée est envoyée vers les blocs de calcul 17, 20 et 21 qui sont, eux aussi, pilotés par le séquenceur 15 de manière que le calcul des seuils de comparaison soit lui aussi individualisé et affecté à un cylindre déterminé.

Le calcul de la valeur moyenne $\overline{C}$ servant au calcul des seuils $S_1$ et $S_2$, quantités qui ont été illustrées et définies précédemment en relation avec la figure 1, s'effectue à l'étage 17 du microcalculateur 16 en utilisant un algorithme de calcul qui peut être le suivant:

$$\overline{C}_t=\overline{C}_{t-1}+\frac{\overline{C}-\overline{C}_{t-1}}{n}$$

dans lequel $n$ est une constante de filtrage numérique.

Le résultat du calcul effectué à l'étage 17 de chaque nouvelle valeur moyenne $\overline{C}$ est présenté en parallèle sur les entrées des blocs de calcul 18 et 19 dans lesquels sont calculées les valeurs de seuils $S_1$ et $S_2$ illustrés à la figure 1C à chaque impulsion émise par le séquenceur 15 sur son conducteur de sortie 110, de manière a bien individualiser les seuils de comparaison pour chaque cylindre successif. Ces deux blocs de calcul de seuil 18 et 19 réalisant leur fonction en calculant:

— bloc de calcul 18: $S_1=\overline{C}_t . K_1+K'_1$
— bloc de calcul 19: $S_2=\overline{C}_t . K_2+K'_2$

relations dans lesquelles $K_1$, $K'_1$, $K_2$, $K'_2$ sont des constantes.

Les résultats des calculs de ces deux seuils de comparaison sont ensuite envoyés sur les entrées de comparateurs 20 et 21 respectivement qui reçoivent en parallèle la valeur instantanée du signal de cliquetis correspondant à un cylindre puisqu'ils sont tous deux connectés en parallèle par le faisceau de conducteurs 111 à la sortie du convertisseur 14. Suivant la valeur instantanée du cliquetis, un des deux comparateurs 20 qui calcule la quantité $\overline{C}_1$ et 21 qui calcule la quantité $\overline{C}_2$ a sa sortie affectée. La sortie 23 du comparateur 20 fournit un signal représentatif du précliquetis $S_1$ (figure 1C) tandis que la sortie 24 d'une porte logique 22 à fonction ET connectée par ses entrées aux sorties des deux comparateurs 20 et 21 fournit un signal représentatif du cliquetis $S_2$ (figure 1C).

On utilise le signal apparaissant éventuellement sur l'une ou l'autre des sorties 23 et 24 du microcalculateur 16 pour agir en plus ou en moins, à chaque demi-tour du volant moteur sur l'avance programmée par l'allumage électronique. Ceci est obtenu en envoyant vers le dispositif d'allumage électronique un train d'impulsions dont chacune entraîne la modification de l'avance de 1° compté le long de la périphérie du volant, le signe étant indiqué par la valeur zéro/un d'une autre information. Chaque train d'impulsions est envoyé à un moment bien précis dans le demi-tour qui résulte de l'envoi d'un signal de validation par le circuit d'allumage électronique. De nombreux modèles de microcalculateurs actuellement sur le marché peuvent remplir les conditions exigées du microcalculateur 16. Ce peut être par exemple un microcalculateur du type 8048 de la firme américaine INTEL.

**Revendications**

1. Procédé de calcul et de réglage de l'optimalisation de l'avance à l'allumage d'un moteur à combustion interne au moyen d'un système de détection du cliquetis à l'aide d'un accéléromètre (10) rigidement fixé sur la culasse du moteur, selon lequel on fait subir un traitement analogique au signal accélérométrique comportant entre autres l'intégration dudit signal à l'intérieur d'une fenêtre de dimension déterminée, on convertit le signal intégré sous forme numérique, on compare la valeur accélérométrique intégrée et convertie sous une forme numérique à au moins un seuil de comparaison et l'on agit sur l'avance de l'allumage électronique en fonction du résultat de ladite comparaison, caractérisé en ce que l'on calcule une valeur moyenne $\overline{C}$ proportionnelle aux $n$ coups de cliquetis précédents, on calcule deux seuils de comparaison $S_1$ et $S_2$ qui sont chacun une fonction linéaire de la valeur moyenne $\overline{C}$ calculée précédemment, on compare la valeur accélérométrique intégrée et convertie sous une forme numérique à chacun de ces seuils et l'on en déduit l'existence ou l'absence d'une valeur de précliquetis et/ou de cliquetis audible que l'on utilise ensuite pour assurer ladite action sur l'avance programmée de l'allumage électronique.

2. Procédé de calcul et de réglage suivant la revendication 1, caractérisé en ce que tous les cylindres du moteur sont traités successivement un par un pour la détection.

3. Procédé de calcul et de réglage suivant la revendication 1, caractérisé en ce que les seuils de comparaison $S_1$ et $S_2$ sont calculés successivement un par un pour chaque cylindre.

4. Procédé de calcul et de réglage suivant la revendication 3, caractérisé en ce que les seuils de comparaison $S_1$ et $S_2$ sont déterminés à partir d'une valeur moyenne $\overline{C}$ calculée successivement pour chaque cylindre.

5. Procédé de calcul et de réglage suivant la revendication 4, caractérisé en ce que la valeur moyenne $\overline{C}$ tient compte des $n$ valeurs précédentes de $\overline{C}$ pour le calcul de la valeur moyenne suivante.

6. Procédé de calcul et de réglage suivant la revendication 1, caractérisé en ce que la fenêtre d'intégration s'étend sur 40° à partir de chaque point mort haut et de chaque point mort bas.

7. Dispositif spécialement conçu pour la mise en oeuvre du procédé selon la revendication 1 comprenant des moyens de traitement analogiques (12) du signal prélevé sur l'accéléromètre (10), ces moyens (12) comportant entre autres un intégrateur (30, 36), des moyens logiques (13) de commande de l'intégrateur, un convertisseur analogique-numérique (14), des moyens de comparaison (20, 21) du signal modifié du capteur avec au moins un signal de comparaison et un dispositif d'allumage électronique commandé par lesdits moyens de comparaison, caractérisé en ce que ledit dispositif comprend un microcalculateur (16) comportant un étage (17) de calcul d'une valeur moyenne $\overline{C}$ proportionnelle aux $n$ coups de cliquetis précédents, deux étages de calcul (18, 19) de seuils de comparaison ($S_1$, $S_2$) qui sont chacun une fonction linéaire de la valeur moyenne $\overline{C}$ calculée précédemment et lesdits moyens de comparaison (20, 21, 22, 23, 24) pour en déduire l'existence ou l'absence d'une valeur de précliquetis et/ou de cliquetis audible.

8. Dispositif suivant la revendication 7 de calcul et de réglage de l'optimalisation de l'avance à l'allumage d'un moteur à combustion interne à plusieurs cylindres, caractérisé en ce que le microcalculateur (16) comporte un séquenceur (15) adressé par lesdits moyens logiques de commande (13) et commandant ledit étage (17) de calcul d'une valeur moyenne $\overline{C}$ pour invidiualiser lesdits seuils de comparaison ($S_1$, $S_2$) pour chaque cylindre successif.

9. Dispositif de calcul et de réglage de l'optimalisation de l'avance à l'allumage d'un moteur à combustion interne suivant l'une quelconque des revendications 8 et 9, du type comportant un capteur de position angulaire (11) lié au volant moteur, caractérisé en ce que les moyens logiques de commande (13) de l'intégrateur comportent une boucle à verrouillage de phase (71) connectée aux entrées (D, H) d'un registre à décalage (74) ayant un certain nombre de sorties ($S_0$ à $S_{15}$), deux bascules (75, 76) de type RS connectées par leurs entrées respectives à des sorties appropriées dudit registre à décalage (74) et connectées par leurs sorties (78, 79) à dexu interrupteurs analogiques (27, 29) disposés dans le circuit dudit intégrateur (30, 36).

10. Dispositif de calcul et de réglage de l'optimalisation de l'avance à l'allumage d'un moteur à combustion interne suivant la revendication 9, caractérisé en ce que les sorties (78, 79) des deux bascules (75, 76) de type RS sont également connectées en entrées sur une porte logique (77) à fonction OU exclusif dont la sortie (108) est connectée à l'entrée du séquenceur (15) du microcalculateur (16), ledit séquenceur (15) étant connecté par ses sorties, d'une part (110), à l'étage de calcul (17) de la valeur moyenne $\overline{C}$, d'autre part (109), audit convertisseur analogique-numérique (14).

11. Dispositif de calcul et de réglage de l'optimalisation de l'avance à l'allumage d'un moteur à combustion interne suivant la revendication 10, caractérisé en ce que la sortie du convertisseur analogique-numérique (14) est connectée en parallèle en entrées sur l'étage (17) de calcul d'une valeur moyenne $\overline{C}$ et sur des comparateurs (20, 21) fournissant par leurs sorties, le premier directement (23) un signal représentatif du précliquetis et les deux, par une combinaison (22) de leurs sorties, un signal représentatif du cliquetis.

12. Dispositif de calcul et de réglage de l'optimalisation de l'avance à l'allumage d'un moteur à combustion interne suivant l'une quelconque des revendications 8 à 11, dans lequel les moyens de traitement analogiques (12) du signal prélevé sur l'accéléromètre (10) comprennent la combinaison en série d'un amplificateur de charge (25), un étage de filtrage (26) passe-haut, passe-bas réglé sur la fréquence de résonance de la chambre de combustion, caractérisé en ce qu'il comprend en outre un premier interrupteur analogique (27), un étage de redressement double alternance (28), l'intégrateur commandé (30, 36) supportant notamment en parallèle le second interrupteur analogique (29), un étage de sortie (31) dont le conducteur de sortie (69) est connecté en entrée sur ledit convertisseur analogique-numérique (14).

**Patentansprüche**

1. Verfahren zur Berechnung und Einstellung der optimalen Vorzündung eines Verbrennungsmotors, mittels einer Anordnung zum Feststellen des Klopfens mit Hilfe eines Beschleunigungsmessers (10), der fest mit dem Zylinderkopf des Motors verbunden ist, wobei das Beschleunigungssignal einer analogen Behandlung unterworfen wird, die unter anderem die Integration des Signals innerhalb eines Bereichs vorgegebener Abmessung aufweist, eine Umwandlung des integrierten Signals in numerische Form, ein Vergleich des integrierten und in numerische Form umgewandelten Beschleunigungssignals mit wenigstens einem Vergleichsschwellwert und einem Einwirken auf die elektronische Frühzündung als Funktion des Resultats des Vergleichs, dadurch gekennzeichnet, daß ein Mittelwert ($\overline{C}$) berechnet wird, der proportional zu n vorhergehenden Klopfgeräuschen ist, daß zwei Vergleichsschwellwerte ($S1$ und $S2$) berechnet werden, deren jeder eine lineare Funktion des vorher berechneten Mittelwertes ($\overline{C}$) ist, daß der integrierte und in numerische Form umgewandelte Beschleunigungswert mit jedem dieser Schwellwerte verglichen wird und daß daraus das Vorhandensein oder Fehlen eines Wertes für das mögliche Auftreten von Klopfen und/oder das hörbare Auftreten von Klopfen abgeleitet wird, das anschließend verwendet wird um das Einwirken auf die programmierte Vorverstellung der elektronischen Zündung zu gewährleisten.

2. Verfahren zur Berechnung und Einstellung nach Anspruch 1, dadurch gekennzeichnet, daß alle Zylinder des Motors einzeln und nacheinander zur Feststellung gemessen werden.

3. Verfahren zur Berechnung und Einstellung nach Anspruch 1, dadurch gekennzeichnet, daß die Vergleichsschwellwerte (S1 und S2) einzeln und aufeinanderfolgend für jeden Zylinder berechnet werden.

4. Verfahren zur Berechnung und Einstellung nach Anspruch 3, dadurch gekennzeichnet, daß die Vergleichsschwellwerte (S1 und S2) ausgehend von einem Mittelwert ($\overline{C}$) nacheinander für jeden Zylinder bestimmt werden.

5. Verfahren zur Berechnung und Einstellung nach Anspruch 4, dadurch gekennzeichnet, daß der Mittelwert ($\overline{C}$) für die Berechnung des folgenden Mittelwertes die n vorhergehenden Werte von $\overline{C}$ berücksichtigt.

6. Verfahren zur Berechnung und Einstellung nach Anspruch 1, dadurch gekennzeichnet, daß sich der Integrationsbereich über 40° ausgehend von jedem oberen Totpunkt und jedem unteren Totpunkt erstreckt.

7. Vorrichtung zur Durchführung des Verfahrens nach Anspruch 1, mit Anordnungen (12) zur analogen Behandlung des am Beschleunigungsmesser (10) abgegriffenen Signals, wobei diese Anordnungen (12) unter anderem eine Integrierer (30, 36) aufweisen, logische Steuerschaltungen (13) für den Integrierer, einen analog-numerischen Wandler (14), Schaltungen (20, 21) zum Vergleich des vom Fühler stammenden, veränderten Signals mit wenigstens einem Vergleichssignal und einer elektrischen Zündanordnung, die von den Vergleichsschaltungen gesteuert wird, dadurch gekennzeichnet, daß die Vorrichtung einen Mikrorechner (16) aufweist, mit einer Stufe (17) zur Berechnung eines mittleren Wertes ($\overline{C}$) proportional zu n vorhergehenden Klopfschlägen, mit zwei Stufen (18, 19) zur Berechnung der Schwellwerte (S1, S2), die jeweils eine lineare Funktion des vorhergehende, berechneten, mittleren Wertes ($\overline{C}$) sind und mit Vergleichsschaltungen (20, 21, 22, 23, 24) um daraus das Vorhandensein oder Fehlen eines Wertes für mögliches und/oder hörbares Klopfen abzuleiten.

8. Vorrichtung nach Anspruch 7 zur Berechnung und Einstellung der optimalen Vorzündung eines inneren Verbrennungsmotors mit mehreren Zylindern, dadurch gekennzeichnet, daß der Mikrorechner (16) eine Sequenzstufe (15) aufweist, die von den logischen Steuerschaltungen (13) angesteuert wird und die die Stufe (17) zur Berechnung eines mittleren Wertes ($\overline{C}$) steuert zur Individualisierung der Vergleichsschwellwerte (S1 und S2) für jeden folgenden Zylinder.

9. Vorrichtung zur Berechnung und Einstellung der optimalen Vorzündung eines inneren Verbrennungsmotors nach einem der Ansprüche 7 und 8, die einen dem Schwungrad zugeordneten Winkelstellungsfühler (11) aufweist, dadurch gekennzeichnet, daß die logischen Steuerschaltungen (13) des Integrierers eine Phasenverriegelungsschaltung (71) aufweisen, die mit den Eingängen (D, H) eines Schieberegisters (74) verbunden ist, das eine bestimmte Anzahl Ausgänge ($S_0$ bis $S_{15}$) aufweist sowie zwei RS-Flip-Flops (75, 76) aufweist, deren Eingänge mit den entsprechenden Ausgängen des Schieberegisters (74) verbunden sind und deren Ausgänge (78, 79) mit zwei analogen Schaltern (27, 29) verbunden sind, die im Kreis des Integrierers (30, 36) angeordnet sind.

10. Vorrichtung zur Berechnung und Einstellung der optimalen Vorzündung eines inneren Verbrennungsmotors nach Anspruch 9, dadurch gekennzeichnet, daß die Ausgänge (78, 79) der beiden RS-Flip-Flops (75, 76) gleichfalls eingangsseitig mit einer reinen logischen ODER-Torschaltung (77) verbunden sind, deren Ausgang (108) mit dem Eingang der Sequenzstufe (15) des Mikrorechners (16) verbunden ist, wobei die Ausgänge der Sequenzstufe (15) einerseits (110) mit der Stufe (17) zur Berechnung des mittleren Wertes ($\overline{C}$) verbunden sind und andererseits (109) mit dem analog-numerischen Wandler (14).

11. Vorrichtung zur Berechnung und Einstellung der optimalen Vorzündung eines inneren Verbrennungsmotors nach Anspruch 10, dadurch gekennzeichnet, daß der Ausgang des analognumerischen Wandlers (14) parallel mit dne Eingängen der Stufe (17) zur Berechnung eines mittleren Wertes ($\overline{C}$) und mit den Eingängen der Vergleicher (20, 21) verbunden ist, von derne Ausgangssignale das Erste (23) ein direktes Signal für das mögliche Auftreten von Klopfen ist, und deren beide durch Kombinieren (22) ihrer Ausgänge ein Signal für das Klopfen darstellen.

12. Vorrichtung zur Berechnung und Einstellung der optimalen Vorzündung eines inneren Verbrennungsmotors nach einem der Ansprüche 8 bis 11, wobei die Anordnungen (12) zur logischen Verarbeitung des am Beschleunigungsmesser (10) abgegriffenen Signals die Serienschaltung eines Ladeverstärkers (25), einer Hochpaß-Tiefpaß-Filterstufe (26), die auf die Resonanzfrequenz der Verbrennungskammer eingeregelt ist, aufweisen, dadurch gekennzeichnet, daß sie außerdem einen ersten Analogschalter (27) aufweist, sowie eine Einweggleichrichterstufe (28), wobei der gesteuerte Integrierer (30, 36) einen insbesondere parallel geschalteten zweiten Analogschalter (29) trägt und eine Ausgangsstufe (31), deren Ausgangsleitung (69) mit dem Eingang des analog-numerischen Wandlers (14) verbunden ist.

**Claims**

1. A method of computing and controlling the optimisation of the ignition advance of an internal combustion engine, by means of a system for detecting pinking with the aid of an accelerometer (10) rigidly fixed on the cylinder head of the engine, wherein the accelerometer signal is subjected to an analog treatment, including inter alia integrating said signal within a window of a specific size, converting the integrated signal to digital form, comparing the accelerometer value, integrated and converted to a digital form, with at least one comparison threshold, and acting on the advance of the electronic ignition according to the result of said comparison, characterised in that the mean value $\overline{C}$ is calculated, proportional to the $n$ preceding pinking knocks, two comparison thresholds $S_1$ and $S_2$ are computed, each being a linear function of the previously calculated mean value $\overline{C}$, the accelerometer value, integrated and converted to digital form, is compared with each of those thresholds, and the existence or the absence of a pre-pinking value and/or an audible pinking value is deduced therefrom, then used to produce said action on the programmed advance of the electronic ignition.

2. The method of claim 1, characterised in that all the cylinders of the engine are treated successively, one by one, for detection purposes.

3. The method of claim 1, characterised in that the comparison thresholds $S_1$ and $S_2$ are computed successively, one by one, for each cylinder.

4. The method of claim 3, characterised in that the comparison thresholds $S_1$ and $S_2$ are determined from a mean value $\overline{C}$, which is calculated for each cylinder in succession.

5. The method of claim 4, characterised in that the mean value $\overline{C}$ takes the $n$ preceding values of $\overline{C}$ into account when calculating the following mean value.

6. The method of claim 1, characterised in that the integrating window extends over 40° from each top dead centre point and each bottom dead centre point.

7. Apparatus specially designed to carry out the method of claim 1, comprising means (12) for applying analog treatment to the signal picked up at the accelerometer (10), the means (12) including inter alia an integrator (30, 36), logical means (13) for controlling the integrator, an analog-digital converter (14), means (20, 21) for comparing the modified signal from the pick up with at least one comparison signal, and an electronic ignition apparatus controlled by said comparison means, characterised in that said apparatus comprises a microprocessor (16) including a stage (17) for computing a mean value $\overline{C}$ proportional to the $n$ preceding pinking knocks, two stages (18, 19) for computing comparison thresholds ($S_1$, $S_2$) which are a linear function of the mean value $\overline{C}$ previously calculated, and said comparison means (20, 21, 22, 23, 24) to deduce therefrom the existence or the absence of a pre-pinking and/or an audible pinking value.

8. Apparatus according to claim 7 for computing and controlling optimisation of the ignition advance of an internal combustion engine with a plurality of cylinders, characterised in that the microprocessor (16) has a sequencer (15) which is addressed by said logical control means (13) and which controls said stage (17) for computing a mean value $\overline{C}$, in order to individualise said comparison thresholds ($S_1$, $S_2$) for each successive cylinder.

9. Apparatus for computing and controlling optimisation of the ignition advance of an internal combustion engine according to claim 8 or 9, of the type comprising an angular position pick-up (11) joined to the driving flywheel, characterised in that the logical means (13) for controlling the integrator comprise a phase-locked loop (71) connected to the inputs (D, H) of a shift register (74) with a certain number of outputs ($S_0$ to $S_{15}$), two flip-flop circuits (75, 76) of the type RS, which are connected by their respective inputs to appropriate outputs of said shift register (74), and connected by their outputs (78, 79) to two analog switches (27, 29) arranged in the circuit of said integrator (30, 36).

10. Apparatus for computing and controlling optimisation of the ignition advance of an internal combustion engine according to claim 9, characterised in that the outputs (78, 79) of the two flip-flop circuits (75, 76) of the type RS are also connected, at their inputs, to a logical gate (77) with an exclusive OR function, with its output (108) connected to the input of the sequencer (15) of the microprocessor (16), said sequencer (15) being connected by its outputs, in one case (110) to the stage (17) for computing the mean value $\overline{C}$, and in the other case (109) to said analog-digital converter (14).

11. The apparatus of claim 10, characterised in that the output of the analog-digital converter (14) is connected in parallel, at its inputs, with the stage (17) for computing a mean value $\overline{C}$ and with comparators (20, 21) supplying signals through their outputs, the first directly (23) supplying a signal representing pre-pinking, and both supplying a signal representing pinking through a combination (22) of their outputs.

12. The apparatus of any of claims 8 to 11, wherein the means (12) for applying analog treatment to the signal picked up at the accelerometer (10) comprise the combination in series of a load amplifier (25) and a highpass, low-pass filtering stage (26) which is set to the resonance frequency of the combustion chamber, characterised in that it further comprises a first analog switch (27), a full wave rectifying stage (28), the controlled integrator (30, 36) particularly carrying the second analog switch (29) in parallel, and an output stage (31) with its output conductor (69) connected at the input to said analog-digital converter (14).

**0018858**

FIG_1a

FIG_1b

FIG_1c

1

FIG. 2

FIG_3

FIG. 4

FIG_5